# EUROPEAN PATENT APPLICATION

(11) **EP 1 708 425 A1**
(43) Date of publication of application: **04.10.2006**
(21) Application number: 05252028.5
(22) Date of filing: 31.03.2005
(51) Int. Cl.: H04L 12/56

(54) **Tunnelling of multicast data**

(71) Applicant: MATSUSHITA ELECTRIC INDUSTRIAL CO., LTD., Kadoma-shi, Osaka 571-8501 (JP)
(72) Inventor: Antoine, Stephane, Reading Berkshire, RG4 7SY (GB); Kasapidis, Makis, Markinch Fife KY7 6DS (GB)
(74) Representative: Haley, Stephen

(57) **Abstract**

A method of routing multicast data packets to a mobile node (1). The mobile node (1) forms part of a data transmission system comprising at least two access routers (2, 3) for providing data from at least one data source (4). the access routers (2, 3) are arranged to be capable of wireless communication with the mobile node (1). The method comprises the steps of: determining that the mobile node (1) is to start communicating with a new access router (3) and to stop communicating with a previous access router (2); reporting to the previous address router (2), the multicast addresses currently being received by the mobile node, together with filtering rules associated therewith; providing to the mobile node (1) the new access router address (3); advising the previous access router (2) of the address of the next access router (3); controlling the previous access router (2) to initiate a handover to the new access router, the initiating including data representing the multicast addresses and associated filtering rules that the mobile node (1) is currently using; controlling the previous access router (2) to capture and buffer multicast packets of data which conform to the address and filtering rules; forwarding the buffered multicast packets to the new access router (3) from the previous access router confirming connection between the new access router (3) and the mobile node (1); and forwarding from the new access router to the mobile node the buffered multicast packets.

## Description

The present invention relates to mobile communications and in particular it relates to the use of tunnelling to forward multicast packets.

A known standard mobile IPv6 (MIPv6), enables a mobile node to maintain a current session when moving from one access router to another, a process referred to as handover. During handover, there is a period when the mobile node is unable to send or receive packets due to both link switching delay and IP protocol operations. This handover latency results from standard mobile IPv6 procedures, namely movement detection, new care-of address configuration and binding update, is often unacceptable to real-time traffic such as Voice over IP.

FMIPv6 has specified a protocol to improve mobile IPv6 handover latency. Through router solicitation for proxy (RtSoIPr) messages and proxy router advertisement (PrRtAdv) messages, a mobile node confirms a prospective new care-of address while still present on the previous access router's link. This prospective address can be used immediately after attaching to the new subnet link (i.e., the new access router's link) when the mobile mode has received a fast binding acknowledgment message prior to its movement.

If the mobile node moves without receiving a fast binding acknowledgment, the mobile node may still use the new care-of address after announcing its attachment through a fast neighbour advertisement message. The new care-of address may already be in use, in which case a negative acknowledgment will be received and another new care-of address generated.

To avoid loss of data packet during transition from one access router to another the protocol specifies a tunnel between the previous care-of address and the new care-of address. The mobile node sends a fast binding update message to its previous access router to establish this tunnel. When feasible, the mobile node sends the fast binding update from the previous access router's link. Otherwise, it sends it immediately after detecting attachment to the new access router. In any case, the fast binding update triggers the creation of a tunnel between the new access router and the previous access router. The previous access router begins tunneling packets arriving for the previous care-of address to the new care-of address. Such a FMIPv6 tunnel remains active until the mobile node completes the binding update with its correspondents. In the opposite direction, the mobile node reverses tunnel packets to the previous access route, until it completes the binding update and the previous access router forwards the inner packet in the tunnel to its destination (i.e., to the mobile node's correspondent).

This default FMIPv6 relies on the tunneling of *unicast* packets addressed to the mobile node's previous care-of address. A unicast packet is delivered to the unique interface, identified by that address. The default FMIPv6 does not handle the delivery of packets addressed to a *multicast* address (a multicast address being an "identifier" of several interfaces). Consequently FMIPv6 does not provide any tunneling of multicast data from the previous access router to the new access router. Hence, a mobile node receiving multicast traffic will experience packet loss as handover takes place, even if FMIPv6 is used. Mid-session packet loss can degrade the quality of a multicast application such as video conferences. Moreover, lost multicast packets may contain re-keying information, thus leading to lengthy delays in recovering the keys and retrieving contents of received packets. Hence, multicast packet loss needs to be avoided.

It has been proposed to use the home agent to tunnel multicast packets to the mobile node's new care-of address as the mobile node moves. However, several problems arise when encapsulating multicast data through the Mobile IP tunnel. Several users in the same foreign network will be using different tunnels to their home agent while receiving the same multicast traffic. Thus, the benefit of using a shared multicast tree for native multicast traffic transport is removed.

An additional drawback is that non-optimal routing of multicast traffic through the tunnel might result in higher packets delivery delays.

Thus neither MIPv6 nor FMIPv6 is suitable to provide packet loss free handover in support of multicast applications. The present invention aims to overcome this problem.

According to the present invention there is provided a method of routing multicast data packets to a mobile node, the mobile node forming part of a data transmission system comprising at least two access routers for providing data from at least one data source, the access routers being arranged to be capable of wireless communication with the mobile node, the method comprising the steps of:
determining that the mobile node is to start communicating with a new access router and to stop communicating with a previous access router;
reporting to the previous address router, the multicast addresses currently being received by the mobile node, together with filtering rules associated therewith;
providing to the mobile node the new access router address;
advising the previous access router of the address of the next access router;
controlling the previous access router to initiate a handover to the new access router, the initiating including data representing the multicast addresses and associated filtering rules that the mobile node is currently using;
controlling the previous access router to capture and buffer multicast packets of data which conform to the address and filtering rules;
forwarding the buffered multicast packets to the new access router from the previous access router;
confirming connection between the new access router and the mobile node; and
forwarding from the new access router to the mobile node the buffered multicast packet.

In the method of the present invention, a mobile node explicitly uses a protocol such as the FMIPv6 protocol and the associated tunneling from the previous access router (PAR) to the new access router-(NAR) to forward to the mobile node the multicast packets that were delivered whilst the mobile node was performing the handover and to minimize duplication of multicast packet delivery to the mobile node once multicast routing to the new network has been established.

The mobile node (MN) detects that it might soon handover from one access router to another and informs its previous access router (PAR), through a FMIP signaling, about the filtering rules and multicast address of the multicast traffic it is receiving. The previous access router (PAR) starts listening for these packets and buffers them.

The information about the multicast packets that the mobile node (MN) is listening to can be passed on to the new access router (NAR), using a Handover Initiate (HI).

The new access router (NAR) will use this information to prevent duplication by asking for buffering of new multicast packets by the previous access router (PAR) to stop once the fast neighbour advertisement (FNA) has been received and once the designated multicast packets are flowing on the new access router (NAR)'s subnet. By waiting until both the designated multicast packets are flowing on the new access router and the fast neighbor advertisement (FNA) has been received it can be certain that no data is lost whilst ensuring that duplication is avoided.

On arrival to the new access router (NAR), the mobile node (MN) can send a fast neighbour advertisement message to its new access router (NAR). At the NAR, after receiving the fast neighbour advertisement (FNA), and as soon as the new access router (NAR) receives multicast packets for the mobile node (MN) through the native multicast tree, it initiates the stopping of the FMIP tunnel multicast packets forwarding. This technique reduces the number of duplicate multicast packets for the mobile node coming through both the FMIP tunnel and the native multicast tree.

Another way to reduce the handover latency and avoid duplication of multicast packets for the mobile node is for the new access router (NAR) to detect if the designated multicast packets are already present on its link before the mobile node (MN) performs its handover. This could occur when the multicast packets that the mobile node (MN) is listening to are already flowing on the new subnet as a result of another node having requested them. If the new access router (NAR) detects that the designated multicast packets are present on its link, it starts buffering them and notifies the previous access router (PAR) not to buffer them.

The present invention also provides a mobile communication system employing the above methods.

A description of the embodiments of the present invention is now provided with reference to the accompanying drawings, in which:
Figure 1 is a schematic block diagram of a system employing the present invention; and schematically the method of the present invention; and

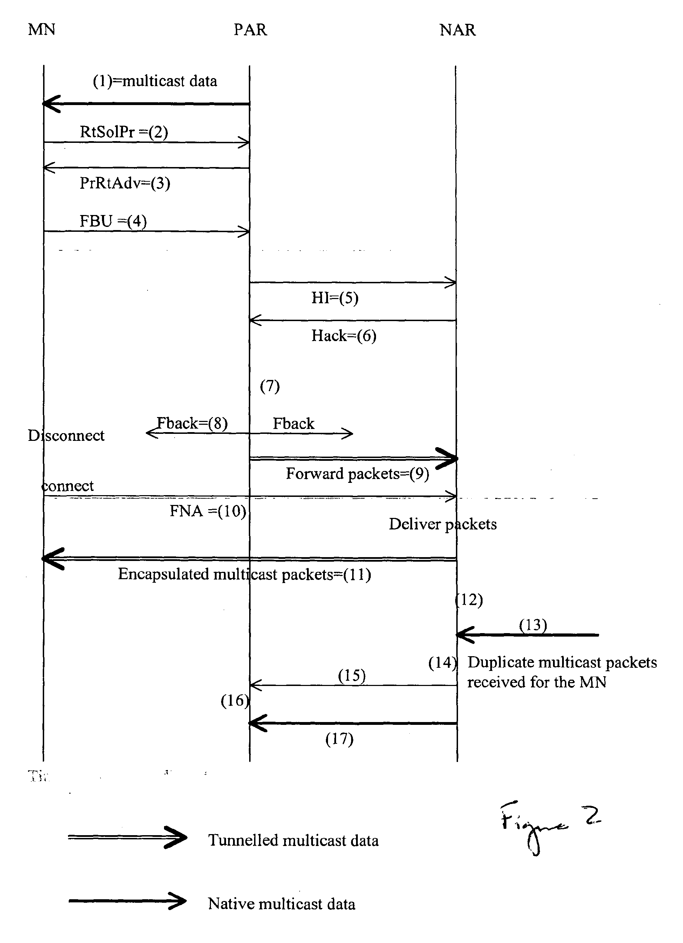

Figure 2 illustrates the time line of the method of figure 1.

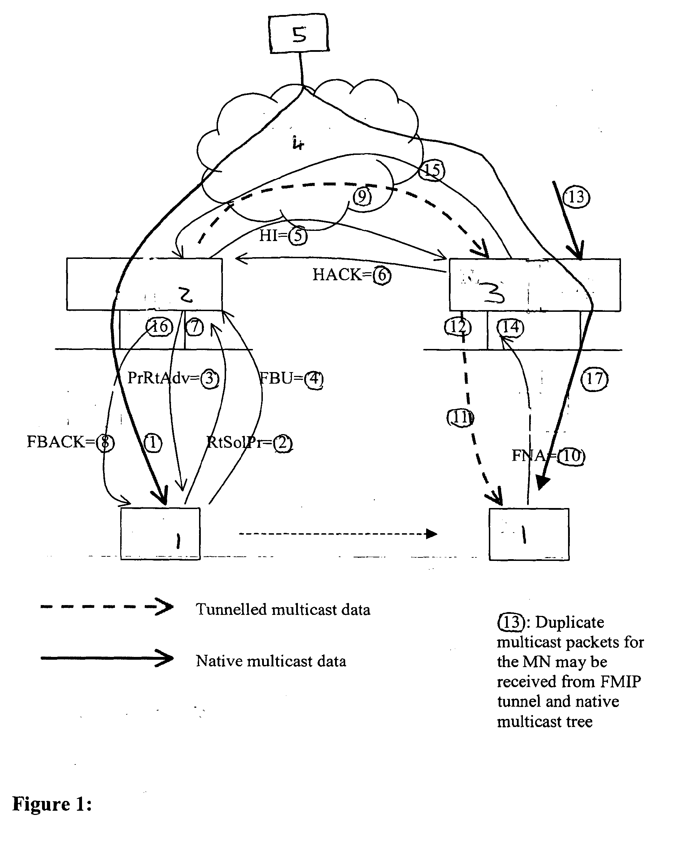

Referring to figure 1, a mobile node 1 which forms part of a system according to the present invention is arranged to communicate, via an access router 2 (which may be fixed or mobile) with a multicast data source 5 which may be, for example, accessed via an internet server or network 4. The mobile node 1 may be part of a hand held device, or could be part of a mobile communication device fixed in a vehicle (not shown). In either case, as the mobile node 1 moves it moves out of range of the access router 2, but within the range of a further access router 3 with which it is now appropriate for it to communicate. A system of the present invention may comprise one or more mobile nodes 1 realised on one of a number of components, such as a mobile telephone, handheld device, or other similar components, and may further comprise any number of access routers 2, 3, as may be required to provide the appropriate level of coverage. In this example, the system is configured to use the FMIPv6 standard protocol, although it will be appreciated that other protocols may be employed.

Referring to figure 1, the method of the invention will now be described in figure 1 the circled numbers show the steps in sequence. In a first step, multicast data packets are initially being received at mobile node 1 via its link with a previous access router (PAR) 2. In a second step the mobile node 1 sends a Router solicitation for proxy (RtSolPr) message. As part of this stage, any multicast addresses that the mobile node 1 is listening to are reported, along with associated filtering rules, to the previous access router (PAR) 2. The mobile node 1 receives a Proxy router advertisement (PrRtAdv) message containing the new access router (NAR) 3 IP address. The Mobile node sends a Fast Binding Update (FBU) to the previous access router 2 in which it reports the new care-of address (new care-of address (nCoA)) it has generated. The previous access router 2 then sends a Handover Initiate (HI) message to the mobile node 1 new access router 3. This message contains the multicast address(es) that the mobile node 1 is listening to and the associated filtering rules. The new access router 3 replies by sending a Handover Acknowledge (HACK). The previous access router 2 captures multicast packets of interest to the mobile node 1 to tunnel them to the mobile node's new location. The previous access router sends a Fast Binding Acknowledgment (FBACK) to the Mobile node 1 confirming the mobile node new care-of address (CoA). The previous access router 2 then forwards encapsulated multicast packets to the new access router 3.

Following on from this the mobile node 1 sends a Fast neighbour advertisement (FNA) when contact with the new subnet is established. The new access router 3 forwards encapsulating the buffered packets to the mobile node 1. The mobile node 1 triggers the procedure for multicast routing to the mobile node's new subnet, and multicast routing to the new subnet is established. The new access router 3 receives native multicast traffic for the mobile node 1 that meets the preferences indicated in the associated filtering rules sent in the Handover initiate (HI) message. As the Fast neighbour advertisement (FNA) has been received at the new access router 3 AND the native multicast traffic has arrived at the new access router 3, the new access router 3 sends a message to inform the previous access router 2 to stop buffering the multicast traffic. This minimizes multicast packet duplication coming from the FMIP tunnel and along the native multicast tree.

The message sent by the new access router 3 to the previous access router 2 contains information identifying the multicast traffic destined for the mobile node. This information is used to inform the previous access router 2 to stop the FMIP buffering. The previous access router 2 then stops tunneling multicast packets through the tunnel. Finally, the handover is complete and the mobile node 1 receives native multicast traffic from the new link.

In a second example, an approach is taken for the situation when multicast routing for the mobile node 1 has already been established on the new link before the Mobile node 1 actually handovers. This happens when, or example, there is already another listener for the multicast group of interest on the new link or when a protocol had established in advance the multicast tree to the new link. In this example after the new access router 3 receives a Fast neighbour advertisement (FNA), the new access router 3 immediately sends a message to the previous access router 2 to stop any multicast forwarding through the FMIP tunnel.

In this second example the following steps occur.

Firstly, as with the first example, multicast data packets are initially being received at the mobile node 1 on the link of the previous access router 2. Secondly, the mobile node 1 receives an indication of a new link coming up. The mobile node 1 resolves through its access router the IP address or addresses of any candidate access router to which it might handover.

The mobile node 1 then reports the multicast address (es) it is accessing to a new access router 3. Fourthly, the previous access router 2 sends theses addresses to the candidate access routers through a Handover initiative (HI), as in the first example.

The new access router or routers then establish whether or not such packets are already routed on their link and the new access router 3 then starts buffering the packets The new access router 3 can then use a HACK message to ask the previous access router 2 not to perform FMIP buffering.

After the mobile node 1 arrives on the new link, it sends a Fast neighbour advertisement (FNA). The new access router (NAR) then forwards any buffered multicast packets to the Mobile node 1 and stops further buffering.

In a final stage the mobile node 1 receives directly its received multicast packets from the new access router 3.

## Claims

1. A method of routing multicast data packets to a mobile node (1), the mobile node (1) forming part of a data transmission system comprising at least two access routers (2, 3) and for providing multicast data from at least one data source (4), the access routers (2, 3) being arranged to be capable of wireless communication with the mobile node (1), the method comprising the steps of:
determining that the mobile node (1) is to start communicating with a new access router (3) and to stop communicating with a previous access router (2);
reporting to the previous address router (2), the multicast addresses currently being received by the mobile node, together with filtering rules associated therewith;
providing to the mobile node (1) the new access router address (3);
advising the previous access router (2) of the address of the next access router (3);
controlling the previous access router (2) to initiate a handover to the new access router, the initiating including data representing the multicast addresses and associated filtering rules that the mobile node (1) is currently using;
controlling the previous access router (2) to capture-and buffer multicast packets of data which conform to the address and filtering rules;
forwarding the buffered multicast packets to the new access router (3) from the previous access router;
confirming connection between the new access router (3) and the mobile node (1); and
forwarding from the new access router to the mobile node the buffered multicast packets.

2. A method according to claim 1, wherein, once the buffered multicast packets have started to be transferred from the new access router (3) to the mobile node (1) and the new access router is receiving further packets from the at least one data source (4), a message is sent from the new access router (3) to the previous access router (2) to stop it buffering further multicast packets.

3. A method of routing multicast data packets to a mobile node (1), the mobile node (1) forming part of a data transmission system comprising at least two access routers (2, 3) for providing data from at least one data source (4), the access routers (2, 3) being arranged to be capable of wireless communication with the mobile mode (1), the method comprising the steps of:
determining that the mobile node is to start communicating with a new access router (3) and to stop communicating with a previous access router (2);
reporting to the new access router (3), the multicast addresses currently being received by the mobile node (1), together with the filtering rules associated therewith;
determining whether the new access router (3) is already receiving multicast packets of data which confirm to the multicast addresses currently being received by node (1), and if this is the case buffering the packets of data at the new access router.

4. A method according to claim 1, 2 or 3, wherein the method conforms with the FMIPv6 communication protocol.

5. A method according to claim 4, wherein the buffered multicast packets are forwarded through an FMIPv6 tunnel to the new access router.

6. A method according to claim 4 or claim 5, wherein the data relating to the multicast addresses and associated filtering rules is passed to the new access router (3) from the previous access router (2) using the handover initiate of the FMIPv6 protocol.

7. A mobile communication system comprising at least one mobile node 1 and at least two access routers (2, 3) and further comprising control means configured to control the mobile node 1 and access routers (2, 3) to perform the method of any preceding claim.
